# EUROPÄISCHE PATENTSCHRIFT

(11) **EP 1 953 028 B1**
(45) Veröffentlichungstag und Bekanntmachung des Hinweises auf die Patenterteilung: **12.10.2011**
(21) Anmeldenummer: 08000947.5
(22) Anmeldetag: 18.01.2008
(51) Int. Cl.: B60K 35/00

(54) **Anzeige- und Bedienvorrichtung eines Kraftfahrzeuges mit einer Erfassung von nutzerabhängigen Parametern**
Display and operational device for a motor vehicle with capturing of user-dependent parameters
Dispositif d'affichage et de commande d'un véhicule automobile incluant la saisie de paramètres utilisateurs

(30) Priorität: 01.02.2007 DE 102007004923
(43) Veröffentlichungstag der Anmeldung: 06.08.2008
(73) Patentinhaber: Volkswagen Aktiengesellschaft, 38436 Wolfsburg (DE)
(72) Erfinder: Missal, Markus, 38102 Braunschweig (DE); Wäller, Christoph, 38102 Braunschweig (DE); Bachfischer, Katharina, 38440 Wolfsburg (DE)

(56) Entgegenhaltungen:
- EP-A1- 1 552 985
- DE-A1-102005 035 111
- DE-B3-102005 019 871
- US-A1- 2004 158 374

## Beschreibung

Die Erfindung betrifft eine Anzeige- und Bedienvorrichtung eines Kraftfahrzeugs umfassend eine Anzeigevorrichtung, eine mit der Anzeigevorrichtung verknüpfte Steuereinheit zum Steuern einer grafischen Darstellung auf einer Anzeigefläche der Anzeigevorrichtung, eine Bedieneinrichtung mit mindestens einem Bedienelement zum Erfassen einer Nutzereingabe für mindestens einen Nutzerparameter und mindestens einen weiteren Nutzerparameter mindestens eines Fahrzeugsystems, mindestens einer Fahrzeugfunktion oder mindestens eines Dienstes, wobei der Nutzerparameter einem Nutzer oder einer Position des Nutzers und der weitere Nutzerparameter entsprechend einem weiteren Nutzer oder einer Position des weiteren Nutzers zugeordnet sind und jeweils das mindestens eine Fahrzeugsystem, die mindestens eine Fahrzeugfunktion oder den mindestens einen Dienst nutzerabhängig und/oder nutzerpositionsabhängig beeinflussen, wobei Darstellungspositionen des mindestens einen Nutzerparameters und des mindestens einen weiteren Nutzerparameters auf der Anzeigefläche entsprechend mit den Positionen des Nutzers und des weiteren Nutzers in dem Kraftfahrzeug korrespondieren, wobei bei einer Betätigung des mindestens einen Bedienelements entsprechend einer Nutzerauswahl der Nutzerparameter oder der mindestens eine weitere Nutzerparameter erfassbar sind.

Moderne Kraftfahrzeuge verfügen häufig über Anzeige- und Bedienvorrichtungen, über die zum einen Informationen über Fahrzeugsysteme, Fahrzeugfunktionen oder fahrzeuginteme und/oder fahrzeugexterne Dienste angezeigt werden und zum ändern Parameter zur Steuerung und Beeinflussung der einzelnen Fahrzeugsysteme, Fahrzeugfunktionen oder Dienste erfassbar sind. Eine Reihe von Fahrzeugsystemen sind so ausgebildet, dass sie nutzerabhängig wirken. Hierzu zählen beispielsweise Fahrzeugsysteme wie eine Sitzheizung, die unterschiedliche Temperaturen in einem Fahrersitz und einem Beifahrersitz erzeugen können. Auch eine Reihe von Klimafunktionen, beispielsweise eine Temperatur, eine Gebläserichtung oder Gebläsestärke können wirkpositions- oder nutzerabhängig gewählt werden. Hierzu werden zum Teil gleiche oder ähnliche Vorrichtungen verwendet. Im Sinne dieser Beschreibung werden jedoch die Fahrersitz-Sitzheizung und die Beifahrersitz-Sitzheizung als zu einem Fahrzeugsystem Sitzheizung zugehörig angesehen, das durch nutzerabhängige Parameter beeinflussbar ist.

Aus DE 103 32 586 B3 ist eine Mittelkonsole eines Kraftfahrzeugs zur Aufnahme von elektronischen Geräten und Schaltelementen bekannt, die derartig in der Mittelkonsole angeordnet sind, dass sie in ihrer Position relativ zum Kraftfahrzeuginsassen veränderbar sind, wobei die Lage der elektronischen Geräte und/oder Schaltelemente durch einen elektrischen und/oder hydraulischen Antrieb veränderbar sind. Gewählte Lagen sind in einem Speicher speicherbar und abrufbar, so dass die Lagen ohne eine erneute Justierung wieder herstellbar sind.

Aus der EP 1 081 667 B1 ist beispielsweise eine Anzeige- und Bedienvorrichtung bekannt, bei der bestimmte Funktionen oder Funktionalitäten durch den Fahrer nicht aktivierbar sind, während sich das Kraftfahrzeug bewegt. Um einem Beifahrer einen Zugriff auf diese Funktionen oder Funktionalitäten während der Fahrt zu ermöglichen, ist in EP 1 081 667 B1 vorgeschlagen, zu überprüfen, ob der Beifahrersitz belegt ist.

Aus DE 10 2005 003 535 A1 ist eine optische und akustische Informationsausgabevorrichtung bekannt, mit der eine Blickrichtung eines Fahrers erkannt wird und bei der eine Informationsausgabe nur erfolgt, wenn eine Blickrichtung mit einer für die entsprechende Inforrnationswiedergabe vorgegebene Blickrichtung übereinstimmt.

Aus der DE 10 2005 035 111 A1 ist ein Bedien - und Anzeigesystem bekannt, welches eine andersartige Anzeigevorrichtung in Form eines Dual-View-Displays umfasst. Das Dual-View-Display stellt für unterschiedliche Betrachtungswinkelbereiche unterschiedliche Informationen dar, wobei aus einem Betrachtungswinkelbereich immer nur die eine der unterschiedlichen Information zu erkennen ist. Um Nutzereingabe ausführen zu können, sind ein zentral angeordnetes Bedienelement und eine Detektoreinheit vorgesehen, die eine Annährung an das zentrale Bedienelement detektiert und eine erkannte Betätigungshandlung einem der Betrachtungswinkelbereiche zuordnet.

Aus US 6,539,289 B2 ist eine Anzeige- und Bedienvorrichtung für ein Kraftfahrzeug bekannt, die über Bedienelemente verfügt, mittels derer ein Fahrer und ein Beifahrer Betätigungshandlungen vornehmen können. Auf einer Anzeigfläche wird ein Bedienführungsschirm auf der Fahrerseite eingeblendet, wenn der Fahrer eine Betätigungshandlung vornimmt und entsprechend auf der Beifahrerseite angezeigt, wenn der Beifahrer die Betätigungshandlung vornimmt.

Aus der DE 10 2005 019 871 B3 ist eine Anordnung zur Bedienung elektronischer Geräte in Kraftfahrzeugen bekannt, diese ist ausgestaltet, eine Orientierung eines Nutzers bei einem Wechsel von einer ersten Bediendarstellung zu einer hiervon verschiednen zweiten Bediendarstellung zu erleichtern. Bei dem Wechsel der Bediendarstellungen wird eine Anzeigeelement sukzessive transformiert. Die Vorrichtung ist mit einer Benutzererkennungseinrichtung gekoppelt. Ein erkannter Benutzer wird über ein hierfür speziell I vorgesehenes Symbol gekennzeichnet. Diese Schrift beinhalted auch die Merkmale des Oberbegriffs des Anspruchs 1.

Aus der EP 1 512 563 A2 ist eine Anzeige- und Bedienvorrichtung für eine Klimaanlage bekannt, die unterschiedliche Anzeigegebiete für zwei vorgewählte Temperaturwerte für einen Fahrer und einen Beifahrer aufweist. Die zwei Temperaturwerte können in Abhängigkeit von einer Nutzerauswahl, über ein als Drehknopf ausgebildetes Bedienelement eingestellt werden: Die Nutzerauswahl erfolgt über zwei Knöpfe, die entsprechend jeweils dem Fahrer und dem Beifahrer zugeordnet sind. Das heißt, wird zunächst der dem Fahrer zugeordnete Knopf betätigt, so ist die Nutzerauswahl "Fahrer" getroffen. Über ein Drehen des Drehknopfes wird die Temperatur für die Fahrerseite festegelegt. Wird hingegen der dem Beifahrer zugeordnete Knopf betätigt, so wird bei einer Betätigung des Drehknopfes die Temperatur für den Beifahrer verändert.

Eine solche Auswahl erfordert eine Vielzahl von Bedienelementen und Betätigungsschritten, um einen Nutzerparameter zu verändern.

Der Erfindung liegt die technische Aufgabe zugrunde, eine Anzeige- und Bedienvorrichtung für ein Kraftfahrzeug zu schaffen, mit der eine einfachere Bedienung von Fahrzeugsystemen, Fatirzeugfunktionen und/oder Diensten möglich ist, die über nutzerabhängige oder wirkpositionsabhängige Parameter, die als Nutzerparameter bezeichnet werden, beeinflussbar sind.

Die Aufgabe wird erfindungsgemäß durch eine Anzeige- und Bedienvorrichtung mit den Merkmalen des Patentanspruchs 1 gelöst. Vorteilhafte Ausgestaltungen ergeben sich aus den Unteransprüchen.

Zur Lösung der Aufgabe wird eine Anzeige- und Bedienvorrichtung eines Kraftfahrzeugs umfassend eine Anzeigevorrichtung, eine mit der Anzeigevorrichtung verknüpfte Steuereinheit zum Steuern einer grafischen Darstellung auf einer Anzeigefläche der Anzeigevorrichtung, eine Bedieneinrichtung mit mindestens einem Bedienelement zum Erfassen einer Nutzereingabe für mindestens einen Nutzerparameter und mindestens einen weiteren Nutzerparameter mindestens eines Fahrzeugsystems, mindestens einer Fahrzeugfunktion oder mindestens eines Dienstes vorgeschlagen, wobei der Nutzerparameter einem Nutzer oder einer Position des Nutzers und der weitere Nutzerparameter entsprechend einem weiteren Nutzer oder einer Position des weiteren Nutzers zugeordnet sind und jeweils das mindestens eine Fahrzeugsystem, die mindestens eine Fahrzeugfunktion oder den mindestens einen Dienst nutzerabhängig und/oder nutzerpositionsabhängig beeinflussen, wobei Darstellungspositionen des mindestens einen Nutzerparameters und des mindestens einen weiteren Nutzerparameters auf der Anzeigefläche entsprechend mit den relativen Positionen des Nutzers und des weiteren Nutzers in dem Kraftfahrzeug korrespondieren, wobei bei einer Betätigung des mindestens einen Bedienelements entsprechend einer Nutzerauswahl der Nutzerparameter oder der mindestens eine weitere Nutzerparameter erfassbar sind. Ferner ist eine Nutzerkennungseinheit zum Erkennen, ob die Betätigung des mindestens einen Bedienelements durch den Nutzer oder den mindestens einen weiteren Nutzer vorgenommen wird, und Erzeugen eines Erkennungssignals vorgesehen, so dass die Nutzerauswahl primär anhand des Erkennungssignals erfolgt. Bei einer Betätigung des mindestens einen Bedienelements durch den Nutzer werden somit der Nutzerparameter und bei einer Betätigung des mindestens einen Bedienelements durch den weiteren Nutzer der weitere Nutzerparameter erfasst. Hierdurch ist es möglich eine Benutzerhandlung, die eine Nutzerauswahl vornimmt, in den meisten Fällen einzusparen. Eine nutzerabhängige Temperaturregelung, eine Sitzheizungsregelung, eine positionsabhängige Lautstärkeneinstellung usw. nimmt in fast allen Fällen jeder Nutzer für sich selbst vor. Ist der Nutzer ein Fahrer, so wird er den Nutzerparameter Sitzheizungsstufe für den Fahrersitz einstellen. Ein weiterer Nutzer, der der Beifahrer ist, wird hingegen als weiteren Nutzerparameter die Sitzheizungsstufe für den Beifahrersitz nach seinen Bedürfnissen festlegen. Beide nutzerabhängigen Parameter, der Nutzerparameter (Fahrersitz-Sitzheizungsstufe) und der weitere Nutzerparameter (Beifahrersitz-Sitzheizungsstufe), können über ein gemeinsam genutztes Bedienelement eingegeben werden. Welcher nutzerabhängige Parameter, der Nutzerparameter (Fahrersitz-Sitzheizungsstufe) oder der weitere Nutzerparameter (Beifahrersitz-Sitzheizungsstufe), eingestellt werden soll, kann anhand des Erkennungssignals der Erkennungseinheit ermittelt werden. Betätigt der Beifahrer das Bedienelement, so wird eine Nutzerauswahl "Beifahrer" oder "weiterer Nutzer" vorgenommen. Betätigt hingegen der Fahrer das Bedienelement, so wird die Nutzerauswahl "Fahrer" oder "Nutzer" anhand des Erkennungssignals getroffen. Durch die Verwendung der Erkennungseinheit kann somit eine Betätigungshandlung eingespart werden, wenn der Fahrer seinen fahrerbezogenen Nutzerparameter oder der Beifahrer seinen beifahrerbezogenen weiteren Nutzerparameter einstellen will.

Eine Kontrolle der Eingabe und hierbei insbesondere der gewünschten Nutzerauswahl ist erfindungsgemäß besonders einfach möglich, da vorgesehen ist, dass infolge des Erfassens des Nutzerparameters der Nutzerparameter und infolge des Erfassens des mindestens einen weiteren Nutzerparameters entsprechend der mindestens eine weitere Nutzerparameter jeweils grafisch hervorgehoben dargestellt werden, wobei der die hervorgehobene Darstellung in Form einer hervorgehobenen Einblendung (Popup) erfolgt. Die Einblendung erfolgt vorzugsweise, sobald eine Änderung vorgenommen wird oder sobald eine Änderungsabsicht für die Anzeige- und Bedienvorrichtung erkennbar ist, beispielsweise wenn der Nutzer das Bedienelement berührt. Die Popup-Einblendung erfolgt vorzugsweise im Vordergrund über den Informationen, die vor der Betätigungshandlung auf der Anzeigefläche dargestellt waren oder während der Betätigungshandlung dargestellt würden, wenn diese nicht stattfinden würde. Die Einblendung erfolgt vorzugsweise mit einer Deckkraft von 100%. Es sind jedoch auch Ausführungsformen möglich, bei denen die Einblendung Teiltransparent ist. Eine transparente Einblendung bietet den Vorteil, dass der Nutzer die übrigen sich während der Einblendung im Hintergrund befindlichen Informationen weiter wahrnehmen kann. Die Einblendung erfolgt vorzugsweise zeitlich begrenzt. Hierbei ist besonders bevorzugt eine Korrelation mit einer Betätigungshandlung zum Eingeben des Nutzerparameters oder des mindestens einen weiteren Nutzerparameters vorgesehen. Beispielsweise endet eine Einblendung, wenn die Nutzerauswahl geändert wird und/oder nach einer vorgegebenen Zeitspanne, in der keine Betätigungshandlung zum Ändern des Nutzerparameters oder des mindestens einen weiteren Nutzerparameters festgestellt wurde.

Eine grafische Hervorhebung kann auch durch Farben, eine Vergrößerung der Darstellung, eine Animation, d.h. sich zeitlich (hinsichtlich Form, Position, Größe, Farbe usw.) verändernde grafisch dargestellte Elemente, usw. erfolgen.

Um insbesondere einem Fahrer die Möglichkeit zu geben, außer dem fahrerbezogenen Nutzerparameter auch den beifahrerbezogenen weiteren Nutzerparameter einstellen zu können, beispielsweise weil der Beifahrer sich mit der Bedienung des Fahrzeugs nicht auskennt oder ein beifahrerbezogener weiterer Nutzerparameter bei einer Fahrt ohne einen Beifahrer angepasst werden soll, sieht eine bevorzugte Ausführungsform der Erfindung vor, dass die Bedieneinrichtung ausgebildet ist, eine Nutzerauswahlhandlung zu erfassen und ein sekundäres Auswahlsignal zu erzeugen, so dass die Nutzerauswahl durch das sekundäre Auswahlsignal beeinflussbar ist. Das sekundäre Auswahlsignal wird vorzugsweise gemeinsam mit dem Erkennungssignal ausgewertet. Bevorzugt signalisiert das sekundäre Auswahlsignal einen Nutzerauswahlwechsel. Das bedeutet, dass die Auswahlhandlung nur als Nutzerwechselhandlung und nicht als direkte Nutzerauswahlhandlung erfasst wird, die genau einen Nutzer identifiziert. Solche Ausführungsformen, bei denen für jeden Nutzer ein Nutzer-Bedienelement vorgesehen ist, und das sekundäre Auswahlsignal eine Information umfasst, die genau den Nutzer identifiziert, dessen Nutzer-Bedienelement betätigt wurde, sind denkbar.

An dieser Stelle wird darauf hingewiesen, dass die Darstellungsposition des Nutzerparameters auf der Anzeigefläche eine Information darüber umfasst und ausgibt, wessen Nutzerparameter gerade erfasst wird. Wird durch den Fahrer beispielsweise die Sitzheizungsstufe des Beifahrers durch eine Betätigung des mindestens einen Bedienelements verändert, nachdem eine Nutzerauswahlhandlung erfasst wurde, so wird der weitere Nutzerparameter, Beifahrersitz-Sitzheizungsstufe, beifahrerseitenbezogen, vorzugsweise auf der dem Beifahrer bzw. der Beifahrerseite des Fahrzeugs zugewandten Hälfte oder Seite der Anzeigefläche der Anzeigevorrichtung, dargestellt. Dieses bedeutet ferner, dass eine explizite Kennzeichnung des jeweiligen Nutzerparameters auf der Anzeigefläche unterbleiben kann. Hierdurch steht auf der Anzeigefläche mehr Platz für eine Darstellung des jeweiligen Nutzerparameters oder weiteren Nutzerparameters oder für andere Informationen zur Verfügung. Die Darstellung des Nutzerparameters und des weiteren Nutzerparameters erfolgt somit vorzugsweise so, dass außer der grafischen Darstellungsposition auf der Anzeigefläche keine Information über die jeweilige Nutzerzuordnung entnehmbar ist. Hierdurch wird eine übersichtliche und leicht verständliche und intuitive Benutzerschnittstelle geschaffen.

Um unterschiedliche Fahrzeugsysteme oder ein Fahrzeugsystem, das mehrere nutzerabhängige Parameter aufweist, vorteilhaft bedienen zu können, ist bei einer bevorzugten Ausführungsform mindestens ein weiteres Bedienelement vorgesehen, um mindesten einen zusätzlichen nutzerabhängigen oder wirkpositionsabhängigen Nutzerparameter und mindestens einen weiteren zusätzlichen Nutzerparameter zu erfassen, und eine vertikale und/oder horizontale Darstellungsposition des zusätzlichen Nutzerparameters und/oder weiteren zusätzlichen Nutzerparameters relativ zu der Darstellungsposition des Nutzerparameters oder entsprechend des weiteren Nutzerparameters mit der relativen vertikalen und/oder relativen horizontalen Position des mindestens einen Bedienelements und des mindestens einen weiteren Bedienelements korrespondiert. Hierdurch wird es möglich sich als Nutzer einfacher zu orientieren. Dies bedeutet beispielsweise, dass der Nutzerparameter "Temperatur" auf der Anzeigefläche dichter an einem oberen Rand angezeigt wird als der Nutzerparameter Sitzheizungsstufe, wenn das Bedienelement zum Erfassen der Temperatur oberhalb von dem weiteren Bedienelement zum Erfassen der Sitzheizungsstufe angeordnet ist.

Ein einfaches Erfassen von Nutzerparametern und einer Nutzerauswahlhandlung mit einem Bedienelement ist bei einer Ausführungsform möglich, bei der das mindestens eine Bedienelement als Dreh-Drück-/Zieh-Knopf ausgebildet ist, wobei die Nutzerauswahlhandlung über eine Drück-/Zieh-Betätigung des Dreh-Drück-/Zieh-Knopfes erfassbar ist. Ein Drücken oder Ziehen des Dreh-Drück-/Zieh-Knopfes wird somit als Nutzerauswahlhandlung erfasst und bewirkt einen Wechsel der Nutzerauswahl. Existieren ein fahrerbezogener Nutzerparameter und ein beifahrerbezogener weiterer Nutzerparameter, so können der Fahrer oder der Beifahrer über ein Drücken (Ziehen) des Dreh-Drück(Zieh-)-Knopfes die Nutzerauswahl von "Fahrer" auf "Beifahrer" und umgekehrt wechseln. Es muss zur Eingabe des Nutzerparameters und/oder des weiteren Nutzerparameters jeweils nur ein Bedienelement betätigt werden. Hierdurch ist eine Bauraum sparende Ausführungsform realisierbar, die zudem einfach und komfortabel bedienbar ist.

Die Nutzererkennungseinheit ist vorteilhafterweise eine berührungslos arbeitende Sensoreinheit.

Eine besonders einfache Bedienung ist bei einer Ausführungsform möglich, bei der die Nutzererkennungseinheit zum Erkennen von mindestens einer Geste ausgebildet ist, wobei über die mindestens eine Geste die Nutzerauswahlhandlung vornehmbar ist. Eine solche schiedliche Werte für den Nutzerparameter zugeordnet sein. Diese Werte werden beispielsweise auf der Anzeigefläche angezeigt. Nährt sich der Nutzer mit einem seiner Finger einem dieser Werte, d.h. einer dieser Regionen, so wird der Nutzerparameter auf den entsprechenden Wert gesetzt, der mit dieser Region verknüpft ist. Eine Nutzerauswahl oder ein Wechsel kann beispielsweise über ein gleichzeitiges Annähern an mehrere Regionen mittels mehrerer Finger erfolgen. Ein anschließendes Annähern eines Fingers an einen der Werte legt dann den weiteren Nutzerparameter fest.

Die Erfindung wird nachfolgenden anhand eines Ausführungsbeispiels unter Bezugnahme auf eine Zeichnung näher erläutert. Hierbei zeigen:
- Fig. 1: eine schematische Ansicht einer Anzeige- und Bedienvorrichtung für ein Kraftfahrzeug;
- Fig. 2a, 2b: exemplarische Ansichten einer Anzeigefläche, auf der eine Popup-Einblendung "Sitzheizungsstufe" für einen Nutzerparameter bzw. einen weiteren Nutzerparameter eingeblendet sind; und
- Fig. 3a, 3b: exemplarische Ansichten einer Anzeigefläche, auf der jeweils eine Popup-Einblendung "Temperatur" für einen Nutzerparameter bzw. einen weiteren Nutzerparameter eingeblendet sind.

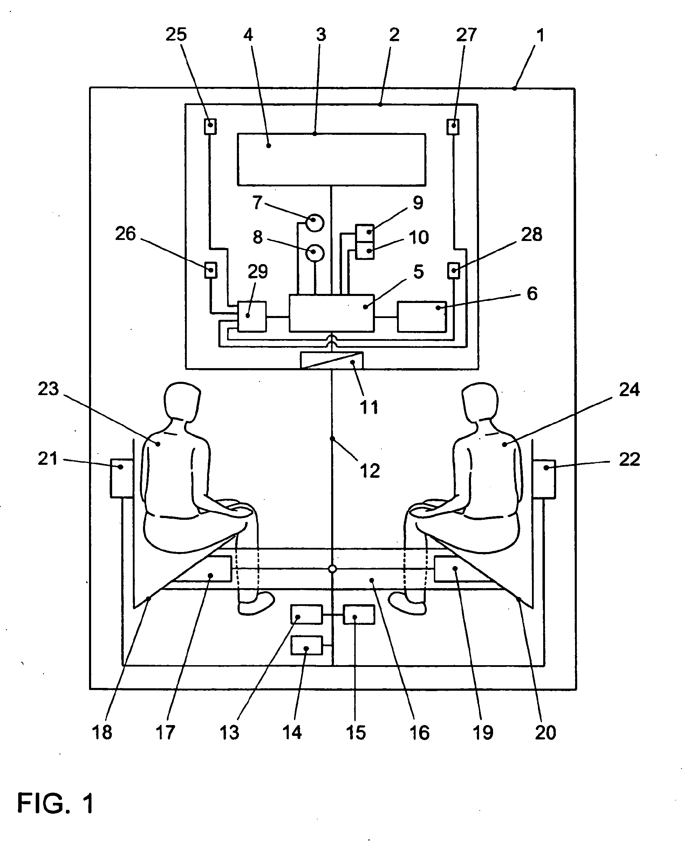

In Fig. 1 ist ein Kraftfahrzeug 1 schematisch dargestellt. Das Kraftfahrzeug 1 umfasst eine Anzeige- und Bedienvorrichtung 2. Die Anzeige- und Bedienvorrichtung 2 umfasst eine Anzeigevorrichtung 3 mit einer Anzeigefläche 4. Die Anzeigevorrichtung 3 ist vorzugsweise als Touchscreen ausgebildet. Die grafische Darstellung von Informationen auf der Anzeigefläche 4 wird über eine Steuereinheit 5 gesteuert, die mit einer Speichervorrichtung 6 verknüpft ist. In der Speichervorrichtung 6 sind Daten abgelegt, die eine Umsetzung einer Benutzerschnittstelle mittels der Steuereinheit 5 ermöglichen.

Zum einen kann die als Touchscreen ausgebildete Anzeigevorrichtung 3 zum Erfassen von Nutzereingaben verwendet werden. Zum andern verfügt die Anzeige- und Bedienvorrichtung 2 über ein oberes Bedienelement 7 und ein unteres Bedienelement 8, die untereinander angeordnet sind. Das obere Bedienelement 7 und untere Bedienelement 8 sind beide als Dreh-Drück-Knopf ausgebildet und mit der Steuereinheit 5 gekoppelt. Die Anzeige- und Bedienvorrichtung 2 umfasst ferner zwei übereinander angeordnete Taster 9,10, die ebenfalls mit der Steuereinheit 5 gekoppelt sind. Ebenso wie die als Touchscreen ausgebildete Anzeigevorrichtung 3 können auch das obere Bedienelement 7, das untere Bedienelement 8 und die beiden Taster 9,10 zum Erfassen von Nutzereingaben verwendet werden.

Die Anzeige- und Bedienvorrichtung 2 ist über eine Schnittstelle 11 mit einem Fahrzeugbus 12 verbunden. Mit dem Fahrzeugbus 12 sind Fahrzeugsysteme 13-16 verbunden. Die Fahrzeugsysteme 13-16 können über die Anzeige- und Bedienvorrichtung 2 bedient werden. Bei einigen Ausführungsformen können weitere Fahrzeugsysteme ganz oder teilweise in die Anzeige- und Bedienvorrichtung 2 integriert sein, beispielsweise ein MP3-Player usw.

Die Fahrzeugsysteme 13-16 umfassen bei der beschriebenen Ausführungsform unter anderem eine Sitzheizung 16, die ein Fahrersitzheizungsmodul 17, das an einem Fahrersitz 18 angeordnet ist, und ein Beifahrersitzheizungsmodul 19 umfasst, das an einem Beifahrersitz 20 angeordnet ist.

An dem Fahrersitz 18 und dem Beifahrersitz 20 sind jeweils ein Sender 21 bzw. 22 angeordnet, die in einen auf dem jeweiligen Fahrersitz 18 sitzenden Nutzer 23 (Fahrer) oder einen auf dem Beifahrersitz 20 sitzenden weiteren Nutzer 24 (Beifahrer) unterschiedliche Hochfrequenzsignale kapazitiv einkoppeln. Nähern der Nutzer 23 oder der weitere Nutzer 24 ein Körperteil der Anzeige- und Bedienvorrichtung 2 an, so wird das jeweils eingekoppelte Hochfrequenzsignal von Sensoren 25-28 erfasst und von einer Nutzererkennungseinheit 29 ausgewertet. Die Sensoren 25-28 empfangen die Hochfrequenzsignale berührungslos. Anhand der unterschiedlichen Hochfreqüenzsignale ist eine zuverlässige Erkennung des Nutzers 23 und des weiteren Nutzers 24 möglich.

Bei Ausführungsformen, wie der in Fig. 1 dargestellten, die mehrere Sensoren 25-28 verwenden, ist zudem eine berührungslose Positionsbestimmung des Körperteils möglich. Eine ausführliche Beschreibung einer solchen Sensorik kann beispielsweise in WO 2004/ 078536 gefunden werden. Eine Nutzererkennung ist jedoch auch schon mit einem einzelnen Sensor möglich. Dieser kann beispielsweise in das obere Bedienelement 7, das untere Bedienelement 8 oder einen der Taster 9, 10 integriert sein.

Um das Fahrzeugsystem Sitzheizung 16 bedienen zu können, ist eine Eingabe eines Nutzerparameters, der beispielsweise die Sitzheizungsstufe für den Nutzer 23 (Fahrer) angibt, und eines weiteren Nutzerparameters notwendig, der beispielsweise die Sitzheizungsstufe für den weiteren Nutzer 24 (Beifahrer) angibt.

Diese nutzerabhängigen Parameter können über das untere Bedienelement 8 eingestellt werden. Nähert der Nutzer 23 (Fahrer) sich dem unteren Bedienelement 8, so wird dieses von der Nutzererkennungseinheit 29 erkannt und ein Nutzererkennungssignal bereitgestellt und eine Nutzerauswahl "Nutzer" ("Fahrer") getroffen. Betätigt der Nutzer 23 (Fahrer) nun das untere Bedienelement 8, indem er es nach links oder rechts dreht, so wird die Sitzheizungsstufe für das Fahrersitzheizungsmodul 17 erniedrigt oder erhöht, d.h., es wird der Nutzerparameter erfasst. Betätigt hingegen der weitere Nutzer 24 (Beifahrer) das untere Bedienelement 8 so erkennt die Nutzererkennungseinheit 29 dieses und die Nutzerauswahl "weiterer Nutzer" ("Beifahrer") wird getroffen. Ein Drehen des unteren Bedienelements 8 bewirkt nun ein Erhöhen oder Erniedrigen des weiteren Nutzerparameters (Sitzheizungsstufe für das Beifahrersitzheizungsmodul 19). Ohne eine Betätigungshandlung durchzuführen, die explizit eine Nutzerauswahl beeinflusst, können so der Nutzer (Fahrer) und der weitere Nutzer (Beifahrer) jeweils die Sitzheizungsstufe für das ihrem jeweiligen Fahrersitz 18 bzw. Beifahrersitz 20 zugeordnete Fahrersitzheizungsmodul 17 oder Beifahrersitzheizungsmodul 19 direkt mit demselben unteren Bedienelement 8 einstellen.

Über eine Drückbetätigung des als Dreh-Drück-Knopfes ausgebildeten unteren Bedienelements 28 kann ein sekundäres Auswahlsignal erzeugt werden. Dieses beeinflusst die Nutzerauswahl in der Wiese, dass eine Umschaltung auf den jeweils anderen Nutzer erfolgt. Betätigt der Nutzer (Fahrer) das untere Bedienelement 8 in drückender Weise ein erstes Mal, so wird die anhand des Nutzererkennungssignals der Nutzererkennungseinheit 29 vorgenommene Nutzerauswahl "Nutzer" ("Fahrer"), in die Nutzerauswahl "weiterer Nutzer" ("Beifahrer") gewechselt. Dieses bedeutet, dass eine Drehbewegung des unteren Bedienelements 8 durch den Nutzer 23 (Fahrer) nun eine Einstellung des weiteren Nutzerparameters, d.h. der Sitzheizungsstufe für das Beifahrersitzheizungsmodul 19 bewirkt. Betätigt der Nutzer 23 das untere Bedienelement 8 erneut in drückender Weise, so wird die Nutzerauswahl wieder auf "Nutzer" ("Fahrer") gewechselt. Analog verhält es sich bei einer Betätigung des unteren Bedienelements 8 durch den weiteren Nutzer 24 (Beifahrer), der durch Drücken des unteren Bedienelements 8 ebenfalls die Nutzerauswahl verändern kann.

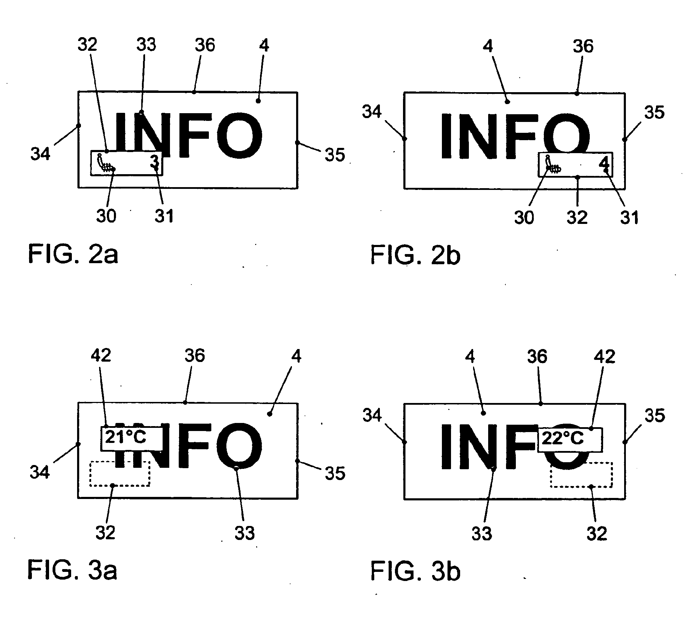

Um für den Nutzer und den weiteren Nutzer jeweils kenntlich zu machen, welchen nutzerabhängigen Parameter, den Nutzerparameter oder den weiteren Nutzerparameter, eine drehende Betätigung des unteren Bedienelements 8 verändert, wird jeweils ein Sitzheizungssymbol 30 und die zugehörige Sitzheizungsstufe 31 auf der Anzeigefläche 4 in Form einer Popupeinblendung "Sitzheizung" 32 über die jeweils aktuell dargestellten Informationen 33 auf der Seite der Anzeigefläche 4 eingeblendet, die dem jeweiligen Nutzer oder weiteren Nutzer zugewandt ist, dessen Nutzerparameter oder weiter Nutzerparameter mittels der drehenden Betätigung des unteren Bedienelements 8 verändert wird. Anders ausgedrückt, gibt die Darstellungsposition der Einblendung "Sitzheizung" 32 an, ob die Nutzerauswahl "Nutzer" ("Fahrer") getroffen ist (Darstellung der Einblendung "Sitzheizung" 32 näher zu einer Fahrerseite 34 der Anzeigefläche 4) oder die Nutzerauswahl "weiterer Nutzer" ("Beifahrer") getroffen ist (Darstellung der Einblendung "Sitzheizung" 32 näher zu einer Beifahrerseite 35 der Anzeigefläche 4). Die beiden Situationen sind in Fig. 2a und 2b dargestellt.

Ein weiteres der Fahrzeugsysteme 13 bis 16 kann beispielsweise eine Klimatisierungsanlage sein. Diese lässt eine nutzerabhängige bzw. wirkpositionsabhängige Temperaturwahl zu. Der Nutzerparameter Temperatur Fahrerseite" und der weitere Nutzerparameter "Temperatur Beifahrerseite" können über das obere Bedienelement 7 in analoger Weise zu der oben für den Parameter Sitzheizungsstufe erläuterten Weise erfasst werden.

Eine zugehörige Popup-Einblendung "Temperatur" 42 erfolgt erneut so (vergleiche Fig. 3a und 3b), dass die horizontale Position eine Nutzerauswahl angibt. Ist die Popup-Einblendung "Temperatur" 42 näher an der Fahrerseite 34 angeordnet (Fig. 3a), so signalisiert diese die Nutzerauswahl "Nutzer" ("Fahrer"). Ist hingegen die Popup-Einblendung "Temperatur" 42 näher an der Beifahrerseite 35 angeordnet (Fig. 3b), so signalisiert diese die Nutzerauswahl "weiterer Nutzer" ("Beifahrer"). Zusätzlich erfolgt die Positionierung der Popup-Einblendung "Temperatur 42 in vertikaler Richtung bezüglich der Popup-Einblendung "Sitzheizung" 32 so, dass sie zu der relativen Anordnung der Bedienelemente 7, 8 korrespondieren, mit denen die entsprechenden nutzerabhängigen Parameter erfasst werden. In diesem Ausführungsbeispiel bedeutet dieses, dass die die Popup-Einblendung "Temperatur" 42 vertikal näher an einer oberen Seite 36 der Anzeigefläche 4 eingeblendet wird als die Popup-Einblendung "Sitzheizung" 32. In Fig. 3a und 3b ist dieses angedeutet. Die Popup-Einblendungen "Temperatur" 42 sind oberhalb der Positionen dargestellt, an den die Popup-Einblendungen "Sitzheizung" 32 dargestellt werden, die gestrichelt angedeutet sind.

Auch die übereinander angeordneten Taster 9, 10 können zum Erfassen eines nutzerabhängigen Parameters verwendet werden. Ein Betätigen des oben angeordneten Tasters 9 kann beispielsweise ein Erhöhen und das Betätigen des unten angeordneten Tasters 10 ein Erniedrigen bewirken. Eine Umschaltung der Nutzerauswahl kann hierbei durch ein zeitgleiches Betätigen der beiden Taster 9, 10 erfolgen. Die Taster 9, 10 können geometrisch auch anders relativ zueinander angeordnet sein.

In einer ganz einfachen Ausführungsform reicht ein einzelnes Bedienelement, das beispielsweise als Taster ausgebildet ist, um nutzerabhängige Parameter zu erfassen. Über eine kurzzeitige Betätigung kann beispielsweise ein "Durchblättern" durch eine Liste von in einer geschlossenen Kette angeordneten Parameterwerten erfolgen. Dem nutzerabhängigen Parameter kann jeweils der zuletzt ausgewählte Parameterwert zugeordnet werden. Eine Nutzerauswahl kann analog durch ein längeres Betätigen beeinflusst werden.

Wieder andere Ausführungsformen können ein Tastaturfeld zum Erfassen des nutzerabhängigen Parameters umfassen. Für eine Beeinflussung der Nutzerauswahl können bei einigen Ausführungsformen, insbesondere für eine alternative oder redundante Nutzerauswahl zu der oben beschriebenen Nutzerauswahl, ein oder mehrere Nutzerauswahlbedienelemente vorgesehen sein.

Es sind ferner andere Bedienelemente zum Erfassen der nutzerabhängigen Parameter verwendbar. Beispielsweise solche, die auf der als Touchscreen ausgebildeten Anzeigefläche eingeblendet werden. In einem solchen Fall sind vorzugsweise jeweils Bereiche der Anzeigefläche vorgesehen, an denen die Popup-Einblendungen für die nutzerabhängigen Parameter dargestellt werden.

Um eine berührungslose Bedienung zu ermöglichen, kann bei der Ausführungsform nach Fig. 1 vorgesehen sein, Raumgebiete vorzusehen, denen jeweils ein Parameterwert zugeordnet ist. Eine Parameterwerterfassung erfolgt beispielsweise, in dem ein Finger des Nutzers oder des weiteren Nutzers in genau einen dieser Bereiche bewegt wird. Eine Nutzerauswahl kann über eine Geste erfolgen. Beispielsweise kann ein Ausstrecken oder Aufspreizen aller Finger der Hand erfasst werden, da nun ein Körperteil in mehreren Raumbereichen gleichzeitig erfasst wird. Auch eine dynamische Geste, bei der der Finger schnell durch mehrere Bereiche bewegt wird, kann als Geste genutzt werden. Hierbei sind viele unterschiedliche Ausführungsformen denkbar. Um eine Geste von einer Parameterauswahlhandlung zu unterscheiden, kann eine Mindestverweildauer in einem der Raumbereiche festgelegt werden. Verbleibt der Finger für diese Mindestverweildauer in einem Raumbereich, so wird der diesem Raumbereich zugeordnete Parameterwert erfasst. Eine Zuordnung der Parameterwerte zu den Raumbereichen und deren Positionen können beispielsweise mittels des Anzeigens der Parameterwerte auf der Anzeigefläche dem Nutzer vermittelt werden. Vorteilhafterweise wird ein angezeigter Parameterwert einem Raumbereich vor der jeweiligen Darstellung auf der Anzeigefläche zugeordnet.

Außer dem beschriebenen Nutzererkennungssystem können auch nach anderen Prinzipien arbeitende Nutzererkennungssysteme verwendet werden, die beispielsweise eine Feldbeeinflussung eines elektromagnetischen Felds durch eine Annäherung eines Körperteils oder eine durch die Annäherung verursachte Veränderung einer optischen Reflexion, beispielsweise im infraroten Wellenlängenbereich, in der Nähe der Anzeigefläche detektieren und auswerten. Solche Systeme können eine Nutzererkennung anhand einer dynamischen Bewegungserkennung ausführen. Hierfür ist es vorteilhaft, dass die Anzeige- und Bedienvorrichtung zwischen dem Nutzer und dem weiteren Nutzer angeordnet wird, so dass diese sich zur Vornahme einer Betätigungshandlung aus unterschiedlichen Richtungen der Anzeigefläche annähern.

### Bezugszeichenliste

- 1: Kraftfahrzeug
- 2: Anzeige- und Bedienvorrichtung
- 3: Anzeigevorrichtung
- 4: Anzeigefläche
- 5: Steuereinheit
- 6: Speichervorrichtung
- 7: oberes Bedienelement
- 8: unteres Bedienelement
- 9, 10: Taster
- 11: Schnittstelle
- 12: Fahrzeugbus
- 13-15: Fahrzeugsysteme
- 16: Fahrzeugsystem (Sitzheizung)
- 17: Fahrersitzheizungsmodül
- 18: Fahrersitz
- 19: Beifahrersitzheizungsmodul
- 20: Beifahrersitz
- 21, 22: Sender
- 23: Nutzer (Fahrer)
- 24: weiterer Nutzer (Beifahrer)
- 25-28: Sensoren
- 29: Nutzererkennungseinheit
- 30: Sitzheizungssymbol
- 31: Sitzheizungsstufe
- 32: Popup-Einblendung "Sitzheizung"
- 33: dargestellte Informationen
- 34: Fahrerseite (Nutzerseite) der Anzeigefläche
- 35: Beifahrerseite (die dem weiteren Nutzer zugewandte Seite) der Anzeigefläche
- 36: obere Seite der Anzeigefläche
- 42: Popup-Einblendung "Temperatur"

## Patentansprüche

1. Anzeige- und Bedienvorrichtung (2) für ein Kraftfahrzeug (1) umfassend eine Anzeigevorrichtung (3), eine mit der Anzeigevorrichtung (3) verknüpfte Steuereinheit (5) zum Steuern einer grafischen Darstellung auf einer Anzeigefläche (4) der Anzeigevorrichtung (3), eine Bedieneinrichtung mit mindestens einem Bedienelement (7, 8, 9, 10) zum Erfassen einer Nutzereingabe für mindestens einen Nutzerparameter und einen weiteren Nutzerparameter mindestens eines Fahrzeugsystems (13-16), einer Fahrzeugfunktion oder eines Dienstes, wobei der Nutzerparameter einem Nutzer (23) oder einer Position des Nutzers (23) und der weitere Nutzerparameter entsprechend einem weiteren Nutzer (24) oder einer Position des weiteren Nutzers (24) zugeordnet sind und jeweils das mindestens eine Fahrzeugsystem (13-16), die mindestens eine Fahrzeugfunktion oder den mindestens einen Dienst nutzerabhängig und/oder nutzerpositionsabhängig beeinflussen, wobei bei einer Betätigung des mindestens einen Bedienelements (7, 8, 9, 10) entsprechend einer Nutzerauswahl der Nutzerparameter oder der mindestens eine weitere Nutzerparameter erfassbar sind,
wobei eine Nutzerkennungseinheit (29) zum Erkennen, ob die Betätigung des mindestens einen Bedienelements (7, 8, 9, 10) durch den Nutzer (23) oder den mindestens einen weiteren Nutzer (24) vorgenommen wird, und Erzeugen eines Erkennungssignals vorgesehen ist, so dass die Nutzerauswahl primär anhand des Erkennungssignals erfolgt, **dadurch gekennzeichnet,**
**dass** in infolge des Erfassens des Nutzerparameters der Nutzerparameter und infolge des Erfassens des mindestens einen weiteren Nutzerparameters entsprechend der mindestens eine weitere Nutzerparameter jeweils grafisch hervorgehoben dargestellt werden und die hervorgehobene Darstellung in Form einer hervorgehobenen Popup-Einblendung (32, 42) erfolgt, wobei Darstellungspositionen des mindestens einen Nutzerparameters und des mindestens einen weiteren Nutzerparameters auf der Anzeigefläche (4) entsprechend mit den relativen Positionen des Nutzers (23) und des weiteren Nutzers (24) in dem Kraftfahrzeug (1) korrespondieren.

2. Anzeige- und Bedienvorrichtung (2) nach Anspruch 1, **dadurch gekennzeichnet, dass** die Bedieneinrichtung ausgebildet ist, eine Nutzerauswahlhandlung zu erfassen und ein sekundäres Auswahlsignal zu erzeugen, so dass die Nutzerauswahl durch das sekundäre Auswahlsignal beeinflussbar ist.

3. Anzeige- und Bedienvorrichtung (2) nach einem der Ansprüche 1 oder 2, **dadurch gekennzeichnet, dass** mindestens ein weiteres Bedienelement (7, 8, 9, 10) vorgesehen ist, um mindesten einen zusätzlichen nutzerabhängigen oder wirkpositionsabhängigen Nutzerparameter und mindestens einen weiteren zusätzlichen Nutzerparameter zu erfassen, und eine vertikale und/oder horizontale Darstellungsposition des zusätzlichen Nutzerparameters und/oder weiteren zusätzlichen Nutzerparameters relativ zu der Darstellungsposition des Nutzerparameters oder entsprechend des weiteren Nutzerparameters mit der relativen vertikalen und/oder relativen horizontalen Position des mindestens einen Bedienelements (7, 8, 9, 10) und des mindestens einen weiteren Bedienelements (7, 8, 9, 10) korrespondiert.

4. Anzeige- und Bedienvorrichtung (2) nach einem der Ansprüche 1 bis 3, **dadurch gekennzeichnet, dass** das mindestens eine Bedienelement (7, 8) als Dreh-Drück-/Zieh-Knopf ausgebildet ist, wobei eine Nutzerauswahlhandlung über eine Drück-/Zieh-Betätigung des Dreh-Drück-/Zieh-Knopfes erfassbar ist.

5. Anzeige- und Bedienvorrichtung (1) nach einem der Ansprüche 1 bis 4, **dadurch gekennzeichnet, dass** das die Nutzererkennungseinheit (29) eine berührungslose arbeitende Sensoreinheit ist.

6. Anzeige- und Bedienvorrichtung (1) nach einem der Ansprüche 1 bis 5, **dadurch gekennzeichnet, dass** die Nutzererkennungseinheit (29) zum Erkennen von mindestens einer Geste ausgebildet ist, wobei über die mindestens eine Geste die Nutzerauswahlhandlung vornehmbar ist.

## Claims

1. Display and operating device (2) for a motor vehicle (1), comprising a display device (3), a control unit (5) which is linked to the display device (3) and is intended to control a graphical display on a display area (4) of the display device (3), an operating device having at least one operating element (7, 8, 9, 10) for capturing a user input for at least one user parameter and one further user parameter of at least one vehicle system (13-16), one vehicle function or one service, the user parameter being associated with a user (23) or a position of the user (23) and the further user parameter being accordingly associated with a further user (24) or a position of the further user (24) and each parameter influencing the at least one vehicle system (13-16), the at least one vehicle function or the at least one service depending on the user and/or the position of the user, the user parameter or the at least one further user parameter being able to be captured when the at least one operating element (7, 8, 9, 10) is actuated according to a user selection,
a user recognition unit (29) for detecting whether the at least one operating element (7, 8, 9, 10) is actuated by the user (23) or the at least one further user (24) and for generating a recognition signal being provided, with the result that the user selection is made primarily using the recognition signal,
**characterized in that**
the user parameter is displayed in a graphically highlighted manner on account of the capture of the user parameter and the at least one further user parameter is accordingly displayed in a graphically highlighted manner on account of the capture of the at least one further user parameter, and the highlighted display is effected in the form of a highlighted pop-up overlay (32, 42), display positions of the at least one user parameter and of the at least one further user parameter on the display area (4) accordingly corresponding to the relative positions of the user (23) and of the further user (24) in the motor vehicle (1).

2. Display and operating device (2) according to Claim 1, **characterized in that** the operating device is designed to capture a user selection action and to generate a secondary selection signal, with the result that the user selection can be influenced by the secondary selection signal.

3. Display and operating device (2) according to either of Claims 1 and 2, **characterized in that** at least one further operating element (7, 8, 9, 10) is provided in order to capture at least one additional user-dependent or active-position-dependent user parameter and at least one further additional user parameter, and a vertical and/or horizontal display position of the additional user parameter and/or further additional user parameter relative to the display position of the user parameter or accordingly of the further user parameter corresponds to the relative vertical and/or relative horizontal position of the at least one operating element (7, 8, 9, 10) and of the at least one further operating element (7, 8, 9, 10).

4. Display and operating device (2) according to one of Claims 1 to 3, **characterized in that** the at least one operating element (7, 8) is in the form of a turn-push-pull knob, a user selection action being able to be captured by means of push-pull actuation of the turn-push-pull knob.

5. Display and operating device (2) according to one of Claims 1 to 4, **characterized in that** the user recognition unit (29) is a contactlessly operating sensor unit.

6. Display and operating device (2) according to one of Claims 1 to 5, **characterized in that** the user recognition unit (29) is designed to detect at least one gesture, the user selection action being able to be carried out via the at least one gesture.

## Revendications

1. Dispositif d'affichage et de commande (2) pour un véhicule automobile (1) comprenant un dispositif d'affichage (3), une unité de contrôle (5) combinée avec le dispositif d'affichage (3) pour contrôler une représentation graphique sur une surface d'affichage (4) du dispositif d'affichage (3), un dispositif de commande muni d'au moins un élément de commande (7, 8, 9, 10) pour détecter une saisie d'utilisateur pour au moins un paramètre d'utilisateur et un autre paramètre d'utilisateur d'au moins un système de véhicule (13-16), d'une fonction de véhicule ou d'un service, le paramètre d'utilisateur étant associé à un utilisateur (23) ou à une position de l'utilisateur (23) et l'autre paramètre d'utilisateur étant associé en conséquence à un autre utilisateur (24) ou à une autre position de l'utilisateur (24) et influençant respectivement l'au moins un système de véhicule (13-16), l'au moins une fonction de véhicule ou l'au moins un service en fonction de l'utilisateur et/ou en fonction de la position de l'utilisateur, le paramètre d'utilisateur ou l'au moins un autre paramètre d'utilisateur pouvant être détecté lors d'un actionnement de l'au moins un élément de commande (7, 8, 9, 10) conformément à une sélection de l'utilisateur,
une unité de reconnaissance de l'utilisateur (29) étant prévue pour reconnaître si l'actionnement de l'au moins un élément de commande (7, 8, 9, 10) par l'utilisateur (23) ou par l'au moins un autre utilisateur (24) a lieu et pour générer un signal de reconnaissance, de sorte que la sélection de l'utilisateur s'effectue en priorité au moyen du signal de reconnaissance,
**caractérisé en ce**
**que** le paramètre d'utilisateur ainsi que l'au moins un autre paramètre d'utilisateur sont à chaque fois représentés avec une mise en valeur graphique respectivement en conséquence de la détection du paramètre d'utilisateur et en conséquence de la détection de l'au moins un autre paramètre d'utilisateur et la représentation mise en valeur est réalisée sous la forme d'une incrustation contextuelle (32, 42) mise en valeur, les positions de représentation de l'au moins un paramètre d'utilisateur et de l'au moins un autre paramètre d'utilisateur sur la surface d'affichage (4) correspondant aux positions relatives de l'utilisateur (23) et de l'autre utilisateur (24) dans le véhicule automobile (1).

2. Dispositif d'affichage et de commande (2) selon la revendication 1, **caractérisé en ce que** le dispositif de commande est configuré pour détecter une manipulation de sélection par l'utilisateur et générer un signal de sélection secondaire de sorte que la sélection de l'utilisateur peut être influencée par le signal de sélection secondaire.

3. Dispositif d'affichage et de commande (2) selon l'une des revendications 1 ou 2, **caractérisé en ce qu'**il est prévu au moins un autre élément de commande (7, 8, 9, 10) afin de détecter au moins un paramètre d'utilisateur supplémentaire dépendant de l'utilisateur ou dépendant de la position active ainsi qu'au moins un autre paramètre d'utilisateur supplémentaire, et une position de représentation verticale et/ou horizontale du paramètre d'utilisateur supplémentaire et/ou de l'autre paramètre d'utilisateur supplémentaire par rapport à la position de représentation du paramètre d'utilisateur ou correspondante de l'autre paramètre d'utilisateur correspond à la position verticale relative et/ou horizontale relative de l'au moins un élément de commande (7, 8, 9, 10)et de l'au moins un autre élément de commande (7, 8, 9, 10).

4. Dispositif d'affichage et de commande (2) selon l'une des revendications 1 à 3, **caractérisé en ce que** l'au moins un élément de commande (7, 8, 9, 10) est réalisé sous la forme d'un bouton à tourner-enfoncer/tirer, une manipulation de sélection par l'utilisateur pouvant être détectée par le biais d'un actionnement de poussée/traction du bouton à tourner-enfoncer/tirer.

5. Dispositif d'affichage et de commande (2) selon l'une des revendications 1 à 4, **caractérisé en ce que** l'unité de reconnaissance de l'utilisateur (29) est une unité de détection qui fonctionne sans contact.

6. Dispositif d'affichage et de commande (2) selon l'une des revendications 1 à 5, **caractérisé en ce que** l'unité de reconnaissance de l'utilisateur (29) est configurée pour reconnaître au moins un geste, la manipulation de sélection par l'utilisateur pouvant être effectuée par le biais de l'au moins un geste.
